(19) Europäisches Patentamt / European Patent Office / Office européen des brevets

(11) EP 2 725 067 B1

(12) **EUROPEAN PATENT SPECIFICATION**

(45) Date of publication and mention of the grant of the patent:
**24.02.2016 Bulletin 2016/08**

(21) Application number: **12802902.2**

(22) Date of filing: **20.06.2012**

(51) Int Cl.:
***C08L 79/08*** *(2006.01)* ***C08J 5/18*** *(2006.01)*
***C08K 5/5399*** *(2006.01)*

(86) International application number:
**PCT/JP2012/065752**

(87) International publication number:
**WO 2012/176806 (27.12.2012 Gazette 2012/52)**

(54) **FLAMEPROOFED ALICYCLIC POLYIMIDE RESIN COMPOSITION AND THIN-WALLED MOLDED BODY OF SAME**

FEUERFESTE ALICYCLISCHE POLYIMIDHARZZUSAMMENSETZUNG UND DÜNNWANDIGER FORMKÖRPER DARAUS

COMPOSITION DE RÉSINE DE POLYIMIDE ALICYCLIQUE IGNIFUGÉE ET CORPS MOULÉ À PAROI FINE DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2011 JP 2011137245**

(43) Date of publication of application:
**30.04.2014 Bulletin 2014/18**

(73) Proprietor: **Mitsubishi Gas Chemical Company, Inc.**
**Tokyo 100-8324 (JP)**

(72) Inventor: **MAKINOSHIMA, Takashi**
**Hiratsuka-shi**
**Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:

**EP-A1- 1 829 910**
**WO-A1-2008/146637**
**WO-A1-2011/062137**
**WO-A1-2011/062137**
**JP-A- 11 181 429**
**JP-A- 2002 235 001**
**JP-A- 2005 047 995**
**US-A1- 2010 233 486**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a polyimide resin composition and a thin-wall molded article using the same.

BACKGROUND ART

In general, a polyimide resin is a heat-resistant resin produced by subjecting a polyamic acid synthesized by a condensation reaction between an aromatic tetracarboxylic acid anhydride and an aromatic diamine as raw materials to a ring closure reaction. Such a wholly aromatic polyimide resin is capable of exhibiting an excellent resistance to thermal decomposition, a high durability against chemical changes such as oxidation and hydrolysis and excellent mechanical properties and electrical properties owing to a rigidity of a molecular chain of the resin as well as a stabilized resonance and a strong chemical bond thereof. In addition, the wholly aromatic polyimide resin has been extensively used as a film, a coating agent, a molded member and an insulating material in various application fields including electric, electronic, automobile and aerospace industries, etc., owing to a good flexibility thereof. However, the wholly aromatic polyimide resin is unsuitable for use as an alternate material of glass or a ceramic material used in a substrate for computers, mobile phones or the like because the resin is colored from light yellow to reddish brown.

There is a rapid increase in demand for technical development of transparent high heat-resistant resins having a flexibility together with a heat resistance and a mechanical strength. As a material capable of satisfying these requirements, a colorless transparent polyimide has been expected and noticed. As a polyimide resin having a high heat resistance and a high transparency, there has been reported a fluorinated polyimide resin containing a perfluoroalkyl group introduced into a repeated structural unit thereof (refer to Patent Documents 1 and 2). However, since the polyimide resin has a poor solubility in solvents by itself, in order to obtain a polyimide film or coating film, it is necessary that after casting a polyamic acid having a poor storage stability to form a film thereof, the resulting film is heated at a high temperature of 350°C for imidation thereof. For this reason, the polyimide resin tends to have such a drawback that the resulting film suffers from yellowing depending upon heat treatment conditions upon molding or forming the film and therefore fails to exhibit a sufficient transparency.

On the other hand, as a solvent-soluble transparent polyimide resin that can be formed into a film without need of any high-temperature treatment, there have been reported the alicyclic polyimide resin produced from a tetravalent alicyclic tetracarboxylic acid or a derivative thereof and a divalent diamine as constituents thereof, and the alicyclic polyimide resin produced from a tetravalent tetracarboxylic acid or a derivative thereof and a divalent alicyclic diamine as constituents thereof. For example, there is disclosed the method of producing a transparent less-colored film having a glass transition temperature of 300°C or higher from a solution of a polyimide resin prepared from 1,2,4,5-cyclohexane tetracarboxylic acid dihydride and a diamine having a specific structure (refer to Patent Document 3).

The alicyclic polyimide resins can be imparted with a good solubility in solvents by introducing an alicyclic component or an aliphatic component into a polyimide resin. On the other hand, the alicyclic polyimide resins tend to have drawbacks such as a high flammability. For this reason, from the viewpoint of safety, the alicyclic polyimide resins must be limited in its applications to a sealing material for electric and electronic parts, a protective film material, an insulating material or the like. In addition, even when using the alicyclic polyimide resins as a substrate for displays of computers, mobile phones, etc., or a substrate for solar batteries, it is required that the alicyclic polyimide resins have a flame retardancy.

As a flame retardant compounded in resins for imparting a flame retardancy to the resins, there may be generally used a halogen-based flame retardant, an antimony-based flame retardant and a halogen- and antimony-free flame retardant.

The halogen-based flame retardant is an anxious material having many problems such as deterioration in weathering resistance or electrical properties of resin compositions owing to halogens liberated from the halogen compound, environmental pollution owing to generation of hydrogen halides by thermal decomposition of the halogen compound upon exposure to high temperature conditions. etc.

A typical example of the antimony-based flame retardant is antimony oxide. It is pointed out that the antimony oxide usually added as a flame retardant aid has a carcinogenesis and therefore has problems concerning safety against human bodies.

Under the aforementioned circumstances, there is an increasing demand for a flame-retardant resin composition using neither a halogen compound nor an antimony compound.

Examples of the halogen-free flame retardant include inorganic metal hydrates such as magnesium hydroxide and aluminum hydroxide, and phosphoric acid salts such as ammonium polyphosphate. However, it is required that these flame retardants are added in a large amount in order to attain a sufficient flame-retarding effect, so that the resulting resin composition tends to be deteriorated in transparency. In addition, it may be difficult to uniformly compound

these flame retardants into a resin, so that the resulting resin composition tends to be deteriorated in mechanical properties.

Further, these flame retardants contain an ionic component, so that the polyimide resins compounded with the flame retardants tend to be deteriorated in insulating properties inherent thereto.

There has been reported the method in which a cyclic phenoxy phosphazene compound is compounded in a polyimide-based resin containing at least one solvent solubility-imparting component selected from an aliphatic compound component, an alicyclic compound component and an alkyleneoxide adduct of a bisphenol compound in order to impart a flame retardancy to the polyimide-based resin (refer to Patent Document 4). In Examples of Patent Document 4, the phosphazene compound was added in an amount as large as 30 parts by mass to 100 parts by mass of the polyimide resin in order to impart a flame retardancy corresponding to UL94 Standard V-0 to the polyimide resin by the addition of the phosphazene compound only (refer to Example 1), and a flame retardant aid such as aerogels was further compounded therein in order to reduce an amount of the phosphazene compound added. Such an increased amount of the phosphazene compound added and addition of the flame retardant aid will be unpractical because the resulting resin composition tends to be deteriorated in properties such as colorless transparency, heat resistance and electrical insulating property.

## CITATION LIST

### PATENT LITERATURE

Patent Document 1: JP 8-143666A
Patent Document 2: JP 8-225645A
Patent Document 3: JP 2003-168800A
Patent Document 4: JP 2002-235001A

## SUMMARY OF INVENTION

### TECHNICAL PROBLEM

An object of the present invention is to provide an alicyclic polyimide resin composition that is imparted with a good flame retardancy without adding a halogen-based flame retardant, an antimony-based flame retardant, an inorganic metal hydrate, a phosphoric acid salt, etc., thereto, and also is excellent in transparency, heat resistance and insulating property, and a thin-wall molded article obtained from the resin composition.

### SOLUTION TO PROBLEM

As a result of extensive and intensive researches for solving the above conventional problems, the present inventors have found that when from 1 to 13 parts by mass of a cyano-modified cyclic phenoxy phosphazene compound are compounded with 100 parts by mass of an alicyclic polyimide resin having a specific structure, it is possible to obtain a flame-retardant alicyclic polyimide resin composition that is excellent in transparency, heat resistance and insulating property. Further, it has been found that when a solution prepared by dissolving the alicyclic polyimide resin composition in an organic solvent is cast and then heated, it is possible to obtain a thin-wall molded article having a high total light transmittance and a low haze value. The present invention has been accomplished on the basis of the above findings.

That is, the present invention relates to an alicyclic polyimide resin composition including 100 parts by mass of an alicyclic polyimide resin (A) having a structural unit represented by the following general formula (1) and from 1 to 13 parts by mass of a cyano-modified cyclic phenoxy phosphazene compound (B) represented by the following general formula (2), and a thin-wall molded article formed of the alicyclic polyimide resin composition, which is produced by casting a solution of the alicyclic polyimide resin composition prepared by dissolving the alicyclic polyimide resin composition in an organic solvent and then heating the cast solution.

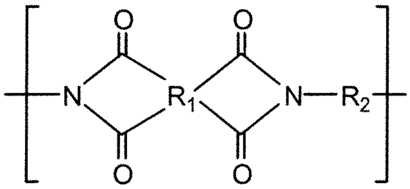

(1)

wherein $R_1$ is a tetravalent alicyclic hydrocarbon group having 4 to 16 carbon atoms; and $R_2$ is at least one group selected from the group consisting of a divalent aliphatic hydrocarbon group having 2 to 28 carbon atoms and a divalent aromatic hydrocarbon group having 6 to 27 carbon atoms.

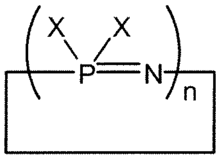

(2)

wherein n is an integer of 3 or 4; and a plurality of X groups are each independently a phenoxy group or a 4-cyanophenoxy group with the proviso that 25% or more of the plurality of X groups are a 4-cyanophenoxy group and all of the plurality of X groups may be a 4-cyanophenoxy group.

ADVANTAGEOUS EFFECTS OF INVENTION

According to the present invention, it is possible to provide an alicyclic polyimide resin composition that is excellent in flame retardancy, transparency, heat resistance and insulating property without using any flame retardant having a fear of giving an adverse influence on human bodies and environmental conditions such as a halogen compound and an antimony oxide compound, and a thin-wall molded article obtained from the resin composition.

DESCRIPTION OF EMBODIMENTS

The alicyclic polyimide resin (A) used in the present invention contains a repeating unit represented by the following general formula (1).

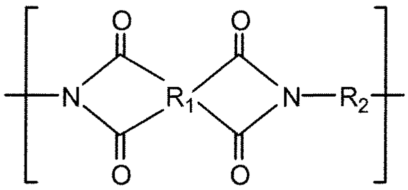

(1)

In the general formula (1), $R_1$ is a tetravalent alicyclic hydrocarbon group having 4 to 16 carbon atoms; and $R_2$ is at least one group selected from the group consisting of a divalent aliphatic hydrocarbon group having 2 to 28 carbon atoms and a divalent aromatic hydrocarbon group having 6 to 27 carbon atoms. $R_2$ may contain a sulfide group, a sulfonyl group, a sulfinyl group, a carbonyl group, a methoxy group, an ester group, an ether group, a fluoro group, etc. The divalent aliphatic hydrocarbon group having 2 to 28 carbon atoms as $R_2$ may be an aliphatic hydrocarbon group bonded through an arylene group.

The tetravalent alicyclic hydrocarbon group having 4 to 16 carbon atoms as $R_1$ is preferably a tetravalent alicyclic hydrocarbon group having 6 to 12 carbon atoms, more preferably an alicyclic hydrocarbon group derived from an aliphatic tetracarboxylic acid or a derivative thereof as specifically described hereinafter, and still more preferably a group derived from cyclohexane contained in a structural unit represented by the following general formula (3).

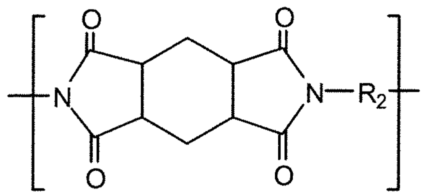

(3)

In the formula (3), $R_2$ is the same as defined above.

In the general formulae (1) and (3), the divalent aliphatic hydrocarbon group having 2 to 28 carbon atoms as $R_2$ may include a group formed by removing two amino groups from such an aliphatic diamine as specifically described hereinafter. Similarly, the divalent aromatic hydrocarbon group having 6 to 27 carbon atoms as $R_2$ may include a group formed by removing two amino groups from such an aromatic diamine as specifically described hereinafter.

In the general formulae (1) and (3), it is preferred that $R_2$ is a divalent aromatic hydrocarbon group having 6 to 27 carbon atoms, and a nitrogen atom bonded to $R_2$ is directly bonded to an aromatic ring of $R_2$.

The alicyclic polyimide resin (A) may be synthesized by reacting an alicyclic tetracarboxylic acid containing a tetravalent alicyclic hydrocarbon group having 4 to 16 carbon atoms or a derivative thereof with at least one diamine selected from the group consisting of an aliphatic diamine containing a divalent aliphatic hydrocarbon group having 2 to 28 carbon atoms and an aromatic diamine containing a divalent aromatic hydrocarbon group having 6 to 27 carbon atoms in an organic solvent in the presence of an imidation catalyst.

Examples of the alicyclic tetracarboxylic acid or derivative thereof include an alicyclic tetracarboxylic acid, an alicyclic tetracarboxylic acid ester and an alicyclic tetracarboxylic acid dianhydride. Among these compounds, preferred is an alicyclic tetracarboxylic acid dianhydride.

Examples of the alicyclic tetracarboxylic acid dianhydride containing a tetravalent alicyclic hydrocarbon group having 4 to 16 carbon atoms include 1,2,4,5-cyclopentane tetracarboxylic acid dianhydride 1,2,4,5-cyclohexane tetracarboxylic acid dianhydride bicyclo[2.2.1]heptane tetracarboxylic acid dianhydride bicyclo[2.2.2]oct-7-ene-2,3,5,6-tetracarboxylic acid dianhydride bicyclo[2.2.2]octane-2,3,5,6-tetracarboxylic acid dianhydride and 3,3',4,4'-dicyclohexyl tetracarboxylic acid dianhydride. Among these alicyclic tetracarboxylic acid dianhydrides preferred is 1,2,4,5-cyclohexane tetracarboxylic acid dianhydride. These alicyclic tetracarboxylic acid dianhydrides may be used alone or in the form of a mixture of any two or more thereof. However, the use of 1,2,4,5-cyclohexane tetracarboxylic acid dianhydride singly is preferred.

Examples of the tetracarboxylic acid containing a tetravalent alicyclic hydrocarbon group having 4 to 16 carbon atoms include 1,2,4,5-cyclopentane tetracarboxylic acid, 1,2,4,5-cyclohexane tetracarboxylic acid, bicyclo [2.2.1] heptane tetracarboxylic acid, bicyclo [2.2.2]oct-7-ene-2, 3, 5, 6-tetracarboxylic acid, bicyclo[2.2.2]octane-2,3,5,6-tetracarboxylic acid and 3,3',4,4'-dicyclohexyl tetracarboxylic acid.

Examples of the tetracarboxylic acid ester containing a tetravalent alicyclic hydrocarbon group having 4 to 16 carbon atoms include 1,2,4,5-cyclopentane tetracarboxylic acid methyl ester, 1,2,4,5-cyclohexane tetracarboxylic acid dimethyl ester, 1,2,4,5-cyclohexane tetracarboxylic acid trimethyl ester, 1,2,4,5-cyclohexane tetracarboxylic acid tetramethyl ester, bicyclo[2.2.2]oct-7-ene-2,3,5,6-tetracarboxylic acid methyl ester, bicyclo[2.2.2]oct-7-ene-2,3,5,6-tetracarboxylic acid dimethyl ester, bicyclo[2.2.2]oct-7-ene-2,3,5,6-tetracarboxylic acid trimethyl ester, bicyclo[2.2.2]oct-7-ene-2,3,5,6-tetracarboxylic acid tetramethyl ester, bicyclo[2.2.1]heptane tetracarboxylic acid methyl ester, bicyclo[2.2.1]heptane tetracarboxylic acid dimethyl ester, bicyclo[2.2.1]heptane tetracarboxylic acid trimethyl ester, bicyclo[2.2.1]heptane tetracarboxylic acid tetramethyl ester, bicyclo[2.2.2]octane-2,3,5,6-tetracarboxylic acid methyl ester, bicyclo[2.2.2]octane-2,3,5,6-tetracarboxylic acid dimethyl ester, bicyclo[2.2.2]octane-2,3,5,6-tetracarboxylic acid trimethyl ester, bicyclo[2.2.2]octane-2,3,5,6-tetracarboxylic acid tetramethyl ester, 3,3',4,4'-dicyclohexyl tetracarboxylic acid methyl ester, 3,3',4,4'-dicyclohexyl tetracarboxylic acid dimethyl ester, 3,3',4,4'-dicyclohexyl tetracarboxylic acid trimethyl ester and 3,3',4,4'-dicyclohexyl tetracarboxylic acid tetramethyl ester.

The above aliphatic diamine and the above aromatic diamine are respectively represented by the following general formula (4).

$$H_2N\text{-}R_2\text{-}NH_2 \qquad (4)$$

In the formula (4), $R_2$ is the same as defined above. That is, the aliphatic diamine has such a structure that two amino groups are directly bonded to the divalent aliphatic hydrocarbon group having 2 to 28 carbon atoms. The divalent aliphatic hydrocarbon group having 2 to 28 carbon atoms may be an aliphatic hydrocarbon group bonded through an arylene group.

The aromatic diamine has such a structure that two amino groups are directly bonded to the divalent aromatic hydrocarbon group having 6 to 27 carbon atoms.

The aliphatic diamine and the aromatic diamine may respectively contain a sulfide group, a sulfonyl group, a sulfinyl group, a carbonyl group, a methoxy group, an ester group, an ether group or a fluoro group in a skeleton thereof.

The aliphatic diamine is not particularly limited, and may be either a linear or branched aliphatic diamine or an aliphatic diamine having an alicyclic structure. Examples of the linear or branched aliphatic diamine include ethylenediamine, tetramethylenediamine, p-xylylenediamine, hexamethylenediamine, 2,5-dimethyl hexamethylenediamine, trimethyl hexamethylenediamine, polyethylene glycol bis(3-aminopropyl)ether, polypropylene glycol bis(3-aminopropyl)ether, m-xylylenediamine and cyclohexanediamine. Examples of the aliphatic diamine having an alicyclic structure include 4,4-diaminodicyclohexylmethane, isophoronediamine, norbornanediamine, 1,3-bis(aminomethyl)cyclohexane, 1,3-diaminocyclohexane, 1,4-diaminocyclohexane and bicyclohexyl diamine. These diamine may be used alone or in the form of a mixture of any two or more thereof.

Examples of the aromatic diamine include, but are not particularly limited to, 4,4'-diaminodiphenyl ether, 3,4'-diaminodiphenyl ether, 4,4'-diaminodiphenyl methane, 1,3-phenylenediamine, 1,4-phenylenediamine, 4,4'-diamino-3,3'-dimethyl biphenyl, 4,4'-diamino-2,2'-dimethyl biphenyl, 4,4'-diamino-2,2'-dimethoxy biphenyl, 4,4'-diamino-2,2'-bis(trifluoromethyl) biphenyl, 4,4'-diaminodiphenyl sulfide, 4,4'-diaminodiphenyl sulfone, 4,4'-diaminobenzophenone, 9,9-bis(4-aminophenyl)fluorene, 1,1-bis[4-(4-aminophenoxy)phenyl]cyclohexane, 2,2-bis(3-aminophenyl)propane, 2,2-bis(4-aminophenyl)propane, 2,2-bis[4-(4-aminophenoxy)phenyl]propane, 2,2-bis[4-(4-aminophenoxy)phenyl]-1,1,1,3,3,3-hexafluoropropane, 1,3-bis(3-amino-α,α-dimethylbenzyl)benzene, 1,3-bis(4-amino-α,α-dimethylbenzyl)benzene, 1,4-bis(3-amino-α,α-dimethylbenzyl)benzene, 1,4-bis(4-amino-α,α-dimethylbenzyl)benzene, 1,4-bis(3-aminophenoxy)benzene, 1,4-bis(4-aminophenoxy)benzene, 1,3-bis(3-aminophenoxy)benzene, 1,3-bis(4-aminophenoxy)benzene, 4,4'-bis(3-aminophenoxy)biphenyl, 4,4'-bis(4-aminophenoxy)biphenyl, bis[4-(3-aminophenoxy)phenyl]ketone, bis[4-(4-aminophenoxy)phenyl]ketone, bis[4-(3-aminophenoxy)phenyl]sulfide, bis[4-(4-aminophenoxy)phenyl]sulfide, bis[4-(3-aminophenoxy)phenyl]ether, bis[4-(4-aminophenoxy)phenyl]ether, bis[4-(3-aminophenoxy)phenyl]sulfone and bis[4-(4-aminophenoxy)phenyl]sulfone. These diamine may be used alone or in the form of a mixture of any two or more thereof.

Among the aforementioned diamines, from the viewpoint of obtaining a polyimide having a high heat resistance, preferred are the aromatic diamines. Among these aromatic diamines, from the viewpoints of readily increasing a molecular weight of the resulting polymer and attaining an excellent heat resistance of the resulting polymer, preferred are 1,4-bis(4-amino-α,α-dimethylbenzyl)benzene, 4,4'-bis(4-aminophenoxy)biphenyl, 9,9-bis(4-aminophenyl)fluorene, 4,4'-diaminodiphenyl ether, 4,4'-diamino-2,2'-dimethoxy biphenyl and 4, 4'-diamino-2,2'-bis(trifluoromethyl)biphenyl.

As the organic solvent used upon production of the alicyclic polyimide resin (A) used in the present invention, there may be mentioned a solvent containing at least one structure selected from the group consisting of a cyclic ether, a cyclic ketone, a cyclic ester, an amide and a urea. Specific examples of the organic solvent include, but are not particularly limited to, at least one aprotic polar organic solvent selected from the group consisting of γ-butyrolactone, N,N-dimethylacetamide, N,N-dimethylformamide, N-methyl-2-pyrrolidone, dimethyl sulfoxide, hexamethyl phosphoramide, cyclopentanone, cyclohexanone, 1,3-dioxolane, 1,4-dioxane, tetramethyl urea and tetrahydrofuran. Among these aprotic polar organic solvents, preferred is at least one organic solvent selected from the group consisting of γ-butyrolactone, N,N-dimethylacetamide, N,N-dimethylformamide and N-methyl-2-pyrrolidone.

Examples of the imidation catalyst used upon production of the alicyclic polyimide resin (A) include tertiary amines such as triethylamine, tripropylamine, tributylamine, pyridine, quinoline, isoquinoline, α-picoline, β-picoline, N,N-dimethyl aniline and N,N-diethyl aniline, and acids such as crotonic acid, benzoic acid, methyl benzoic acid, oxybenzoic acid, benzenesulfonic acid and p-toluenesulfonic acid. Among these imide catalysts, preferred are tertiary amines.

An example of a process for producing the alicyclic polyimide resin (A) is described below, although not particularly limited thereto.

A solution prepared by dissolving a diamine in an organic solvent is mixed with an aliphatic tetracarboxylic acid or a derivative thereof at a temperature of 30°C or lower, and the diamine and the aliphatic tetracarboxylic acid or the derivative thereof are reacted with each other at a temperature of from 4 to 30°C, thereby obtaining a polyamic acid solution. An imidation catalyst is added to the polyamic acid solution to conduct a dehydration imidation reaction of the polyamic acid while distilling off water produced out of the reaction system to obtain a solution of the alicyclic polyimide resin (A).

The molar ratio of the diamine to the alicyclic tetracarboxylic acid or derivative thereof (diamine/alicyclic tetracarboxylic acid or derivative thereof) is preferably in the range of from 0.95 to 1.05 and more preferably from 0.99 to 1.01. When the molar ratio of the diamine to the alicyclic tetracarboxylic acid or derivative thereof is 0.95 or more or 1.05 or less, the increase in molecular weight of the resulting polymer can proceed sufficiently, so that the obtained thin-wall molded article can be prevented from becoming brittle.

An adequate molar ratio of the imidation catalyst to the diamine (imidation catalyst/diamine) is preferably in the range of from 0.01 to 1.0 and more preferably from 0.05 to 0.5. When the molar ratio of the imidation catalyst to the diamine is 0.01 or more, the imidation reaction can proceed sufficiently owing to a catalytic effect of the imidation catalyst. When the molar ratio of the imidation catalyst to the diamine is 1.0 or less, it is possible to readily remove the imidation

catalyst itself from the reaction solution, and prevent undesirable coloration of a thin-wall molded article formed of the below-mentioned alicyclic polyimide resin composition and deterioration in solubility of the alicyclic polyimide resin.

In the dehydration imidation reaction, a distillate containing water as a main component is removed out of the reaction system using a vapor cooling tower mounted to an upper portion of a reaction vessel and a distillate storage apparatus connected thereto. The temperature used upon the dehydration imidation reaction is usually in the range of from 160 to 200°C, preferably from 170 to 190°C and more preferably from 180 to 190°C. When the dehydration imidation reaction temperature is 160°C or higher, the imidation reaction and the increase in molecular weight of the obtained polymer can proceed sufficiently. When the dehydration imidation reaction temperature is 200°C or lower, it is possible to prevent occurrence of drawbacks such as adhesion of burnt resins onto a wall surface of the reaction vessel owing to considerable increase in viscosity of the reaction solution. Meanwhile, in some cases, there may also be used an azeotropic dehydration agent such as toluene and xylene. The reaction may be usually carried out under normal pressures but, if required, under applied pressure. It is required that the reaction temperature is held for at least 1 h or longer and more preferably for 3 h or longer. When the reaction temperature holding time is shorter than 1 h, the imidation reaction and the increase in molecular weight of the obtained polymer tend to hardly proceed sufficiently. The upper limit of the reaction time is not particularly limited, and usually in the range of from 3 to 10 h.

The solid content of the alicyclic polyimide resin is preferably not less than 20% by mass and not more than 50% by mass, and more preferably not less than 30% by mass and not more than 40% by mass on the basis of a total mass of the whole components including the organic solvent as used in the above step. When the solid content of the alicyclic polyimide resin is not less than 20% by mass, the intrinsic viscosity of the polyimide resin is appropriately increased, and the increase in molecular weight of the polymer can proceed sufficiently, so that it is possible to prevent the resulting thin-wall molded article from becoming brittle. On the other hand, when the solid content of the alicyclic polyimide resin is not more than 50% by mass, the viscosity of the polyimide resin solution can be prevented from excessively increasing with the increase in intrinsic viscosity of the polyimide resin, so that the polyimide resin solution can be uniformly stirred to prevent burning of the resin from occurring. The temperature at which the polyimide resin is dissolved in the organic solvent may be suitably at least 20°C or higher, and is preferably in the range of from 30 to 100°C. When the temperature is 20°C or higher, the obtained solution has an adequate viscosity and can be therefore improved in handling property.

The alicyclic polyimide resin solution is mixed with an excess amount of methanol while stirring, thereby obtaining a precipitate of the alicyclic polyimide resin. The precipitate is separated by filtration and heated under vacuum to obtain the alicyclic polyimide resin (A) in the form of a white powder.

Meanwhile, in the above production process, the imidation catalyst may be added prior to adding the alicyclic tetracarboxylic acid or derivative thereof. In such a case, it is not required that the reaction system is held at near room temperature or lower than room temperature as the generally known reaction condition for forming a polyamic acid, and heating can be immediately initiated to conduct the dehydration imidation reaction.

The cyano-modified cyclic phenoxy phosphazene compound (B) used in the present invention is a cyanophenol-substituted cyclic phosphazene or a cyanophenol/phenol-mixedly substituted cyclic phosphazene represented by the following general formula (2).

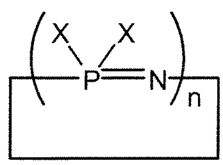

(2)

In the formula (2), n is an integer of 3 or 4; and a plurality of X groups are each independently a phenoxy group or a 4-cyanophenoxy group with the proviso that 25% or more of the plurality of X groups are a 4-cyanophenoxy group and all of the plurality of X groups may be a 4-cyanophenoxy group.

The cyano-modified cyclic phenoxy phosphazene compound has a high solubility in the below-mentioned organic solvents and a good compatibility with the alicyclic polyimide resin (A), and therefore can impart a sufficient transparency to the resulting thin-wall molded article. In addition, the cyano-modified cyclic phenoxy phosphazene compound has a less mass loss under high-temperature conditions as compared to the conventional cyclic phenoxy phosphazene compounds owing to the cyano-modified substituent group contained therein, and therefore is not only excellent in high-temperature reliability, but also hardly susceptible to deterioration in dielectric characteristics of the resulting resin molded article. Further, the cyano-modified cyclic phenoxy phosphazene compound has a high nitrogen content per a unit mass thereof and therefore can exhibit an excellent flame retardancy even when added in a small amount. Therefore, the alicyclic polyimide resin composition prepared by compounding the cyano-modified cyclic phenoxy phosphazene compound therein and the thin-wall molded article obtained from the alicyclic polyimide resin composition are excellent in transparency and hardly suffer from deterioration in heat resistance and mechanical strength.

In the general formula (2), the ratio of the 4-cyanophenoxy group as X to all of the X groups bonded to a phosphorus atom is from 25 to 100%, preferably from 35 to 75% and more preferably from 45 to 55%.

The cyano-modified cyclic phenoxy phosphazene compound may be either a synthesized product or a commercially available product. Examples of the commercially available product of the cyano-modified cyclic phenoxy phosphazene compound include "RABITLE FP-300" (tradename) available from Fushimi Pharmaceutical Co., Ltd. These cyano-modified cyclic phenoxy phosphazene compounds may be used alone or in combination of any two or more thereof.

The amount of the cyano-modified cyclic phenoxy phosphazene compound compounded in the alicyclic polyimide resin composition of the present invention is required to fall within the range of from 1 to 13 parts by mass and preferably from 1 to 10 parts by mass on the basis of 100 parts by mass of the alicyclic polyimide resin. When the amount of the cyano-modified cyclic phenoxy phosphazene compound compounded in the resin composition is more than 13 parts by mass, the below-mentioned thin-wall molded article obtained from the alicyclic polyimide resin composition tends to have a low glass transition temperature and therefore tends to be deteriorated in heat resistance. In addition, the thin-wall molded article tends to suffer from deterioration in total light transmittance and increase in haze value, and tends to exhibit a poor transparency as well as a low mechanical strength. When the amount of the cyano-modified cyclic phenoxy phosphazene compound compounded in the resin composition is less than 1 part by mass, the resulting alicyclic polyimide resin composition and thin-wall molded article tend to be deteriorated in flame retardancy and therefore become unpractical.

The alicyclic polyimide resin composition may also contain, in addition to the cyano-modified cyclic phenoxy phosphazene compound, a condensation-type phosphoric acid ester having a large molecular weight, a cyclic organophosphorus compound or the like, unless the aimed effects of the present invention are adversely affected. Specific examples of the condensation-type phosphoric acid ester and the cyclic organophosphorus compound include, but are not particularly limited to, resorcinol bis(phenyl)phosphate, resorcinol bis(2,6-dixylenyl)phosphate, bisphenol A bis(diphenyl)phosphate, bisphenol A bis(dicresyl)phosphate, and 9,10-dihydro-9-oxa-10-phosphaphenanthrene-10-oxide (tradename: "HCA" available from Sanko Co., Ltd.).

In addition, the alicyclic polyimide resin composition may also contain known additives, for example, antioxidants such as 2,6-di-t-butyl-4-methyl phenol, 2-(1-methylcyclohexyl)-4,6-dimethyl phenol, 2,2-methylene-bis(4-ethyl-6-t-methyl phenol) and 4,4'-thiobis-(6-t-butyl-3-methyl phenol), ultraviolet absorbers such as 2,2'-dihydroxy-4-methoxy benzophenone, 2-(2'-hydroxy-4'-n-octoxyphenyl)benzotriazole and p-t-butylphenyl salicylate, fillers such as calcium carbonate, clay, silica, glass fibers and carbon fibers, and various surfactants, if required, as long as a good transparency of the resulting resin composition and molded article is maintained.

Further, the alicyclic polyimide resin composition may also contain an organic solvent having at least one structure selected from the group consisting of a cyclic ether, a cyclic ketone, a cyclic ester, an amide and a urea. Specific examples of the organic solvent include, but are not particularly limited to, at least one aprotic polar organic solvent selected from the group consisting of γ-butyrolactone, N,N-dimethyl acetamide, N,N-dimethyl formamide, N-methyl-2-pyrrolidone, dimethyl sulfoxide, hexamethyl phosphoramide, cyclopentanone, cyclohexanone, 1,3-dioxolane, 1,4-dioxane, tetramethyl urea and tetrahydrofuran. Among these organic solvents, preferred is at least one organic solvent selected from the group consisting of γ-butyrolactone, N,N-dimethyl acetamide, N,N-dimethyl formamide and N-methyl-2-pyrrolidone.

The thin-wall molded article obtained from the alicyclic polyimide resin composition according to the present invention may be produced by the following method.

Step (1): preparing an alicyclic polyimide resin composition solution containing three components including the alicyclic polyimide resin (A), the cyano-modified cyclic phenoxy phosphazene compound (B) and the organic solvent.

Step (2): extruding or applying the solution on a substrate into a film shape, and then heating the extruded or applied solution to volatilize the organic solvent, thereby obtaining a thin-wall molded article formed of the alicyclic polyimide resin composition.

As the method of preparing the alicyclic polyimide resin composition solution containing three components including the alicyclic polyimide resin (A), the cyano-modified cyclic phenoxy phosphazene compound (B) and the organic solvent in the step (1), there may be used either a method of mixing an alicyclic polyimide resin solution (A') prepared by dissolving the alicyclic polyimide resin (A) in the organic solvent, with the cyano-modified cyclic phenoxy phosphazene compound (B), or a method of mixing the solution (A') with a solution or swelled product (B') prepared by previously dissolving the cyano-modified cyclic phenoxy phosphazene compound (B) in an organic solvent capable of being uniformly mixed with the alicyclic polyimide resin (A) or previously swelling the cyano-modified cyclic phenoxy phosphazene compound (B) with such an organic solvent. The temperature used in the mixing of the step (1) is preferably from 20 to 90°C. In any case, it is important that the resin composition solution is stirred while applying a mechanical shear force thereto using a kneader, etc., after the mixing until a uniform solution is obtained.

The solid content of the alicyclic polyimide resin composition solution obtained in the step (1) is preferably from 10 to 50% by mass and more preferably from 20 to 40% by mass. When the solid content of the alicyclic polyimide resin

composition solution is 10% by mass or more, it is possible to prevent occurrence of drawbacks such as difficulty in retaining a thickness of the thin-wall molded article and prolonged time of treatment for removal of the organic solvent. When the solid content of the alicyclic polyimide resin composition solution is 50% by mass or less, it is possible to prevent occurrence of drawbacks such as difficulty in forming a thin-wall molded article owing to a poor fluidity of the alicyclic polyimide resin composition solution.

The material of the substrate used in the step (2) is not particularly limited, and there may be used a glass substrate and a stainless steel substrate as well as films of organic polymers such as polyethylene terephthalate and polyethylene naphthalate.

In the step (2), the alicyclic polyimide resin composition solution may be extruded or applied on the substrate into a film shape to form a coating layer thereon by any suitable conventionally known coating method. Examples of the coating method include a die extrusion casting method, a coating method using an applicator or a coater, etc.

Next, the thus formed coating layer is heated on a hot plate or in a drying oven at a temperature of 120°C or lower for a period of from about 30 to about 60 min until the coating layer has a self-supporting property to thereby volatilize the organic solvent. Next, the resulting film was peeled off from the substrate, and fixed at its ends with a metal clip or a tenter. Then, the film is heated to at least a boiling point of the organic solvent so as not to cause bumping of the residual organic solvent while restricting contraction of the film under a nitrogen gas flow or under reduced pressure. The film is preferably heated to at least a temperature higher by from 5 to 10°C than the boiling point of the organic solvent and subjected to drying and annealing treatments at that temperature to remove the residual organic solvent therefrom, thereby obtaining the thin-wall molded article.

The content of the organic solvent in the thin-wall molded article is preferably less than 1% by mass. When the content of the organic solvent in the thin-wall molded article is less than 1% by mass, it is possible to prevent occurrence of drawbacks such as thermal deformation of the thin-wall molded article owing to decrease in glass transition temperature thereof by plasticization effect as well as inhibit undesirable coloration of the thin-wall molded article owing to oxidative decomposition, etc., upon exposure to high-temperature conditions.

The thickness of the thin-wall molded article is preferably from 1 μm to 1 mm, more preferably from 10 to 500 μm and still more preferably from 30 to 300 μm from the viewpoint of a suitable molding method.

The total light transmittance of the thin-wall molded article having a thickness of 100 μm is preferably 88% or more, and more preferably 89% or more. When the total light transmittance of the thin-wall molded article is 88% or more, the thin-wall molded article can exhibit a sufficient transparency when used in a substrate for displays of computers or mobile phones or a substrate for solar batteries.

The haze value of the thin-wall molded article having a thickness of 100 μm is preferably 1.3 or less and more preferably 1.0 or less. When the haze value of the thin-wall molded article is 1.3 or less, the thin-wall molded article can exhibit a sufficient transparency when used in a substrate for displays of computers or mobile phones or a substrate for solar batteries.

The glass transition temperature of the thin-wall molded article as an index of a heat resistance thereof is preferably 240°C or higher. When the glass transition temperature of the thin-wall molded article is 240°C or higher, the thin-wall molded article can ensure a sufficient heat resistance. In the case where a transparent conductive layer is formed as a substrate for displays of computers or mobile phones, it is required to subject the layer to a thermal treatment process at a temperature of 250°C or higher in order to reduce an insulation resistance of the conductive layer and increase an electron mobility thereof. Also, in the case where the thin-wall molded article is used as an insulating substrate for a flexible metal-clad laminate in various electric and electronic parts, the thin-wall molded article is required to have a much higher heat resistance. From the above viewpoints, the glass transition temperature of the thin-wall molded article is preferably 250°C or higher, and more preferably 270°C or higher. When the glass transition temperature of the thin-wall molded article is 250°C or higher, it is possible to prevent occurrence of drawbacks in the soldering step.

The thin-wall molded article formed of the alicyclic polyimide resin composition according to the present invention can be suitably used as an optical material, a sealing material for electric and electronic parts, a protective film material and an insulating material because of excellent transparency, heat resistance, insulating property and flame retardancy thereof. In addition, when the alicyclic polyimide resin composition solution obtained by the above method is applied onto a photoelectric transducer and then the organic solvent is volatilized therefrom, it is possible to form a resin-sealed portion having an excellent heat resistance and a high refractive index, thereby producing an excellent photoelectric transducer device. Also, a fluorescent material or the like may be sometimes mixed in a sealing resin for light-emitting diodes for the purpose of converting a wavelength of light emitted to those in a visible light range, etc. The alicyclic polyimide resin of the present invention can be mixed with various fluorescent materials with excellent miscibility, dispersibility and stability, and therefore can be suitably used as a sealing material for light-emitting diodes.

## EXAMPLES

The present invention will be described in more detail below by referring to the following examples. It should

be noted, however, that the following examples are only illustrative and not intended to limit the invention thereto.

Various properties of the alicyclic polyimide resins (A) obtained in the respective Production Examples and the thin-wall molded articles formed of the alicyclic polyimide resin compositions obtained in the respective Examples and Comparative Examples were measured by the following methods.

<Measurement of Logarithmic Viscosity>

The alicyclic polyimide resin solutions obtained in Production Examples 1 to 4 were respectively charged into anhydrous methanol to precipitate solids and remove unreacted monomers therefrom. The resulting precipitate was separated by filtration and vacuum-dried at 80°C for 12 h to obtain a polyimide resin. Then, 0.1 g of the thus obtained polyimide resin was dissolved in 20 mL of N-methyl-2-pyrrolidone, and the resulting solution was measured for a logarithmic viscosity thereof at 30°C using a Cannon-Fenske viscometer. The logarithmic viscosity (μ) was calculated from the following equation.

$$\mu = \ln(t_s/t_0)/C$$

wherein $t_0$ is a solvent flowing time; $t_s$ is a diluted polymer solution flowing time; and C is 0.5 g/dL.

<Glass Transition Temperature>

The heat resistance of the alicyclic polyimide resin composition was evaluated by a glass transition temperature thereof as measured by the following method. That is, the alicyclic polyimide resin composition was heated to 400°C at a rate of 10°C/min in a nitrogen atmosphere using a differential thermal analyzer ("Model No. DSC-6220") available from S.I.I. Nano Technology Inc., to measure a glass transition temperature thereof.

<Total Light Transmittance and Haze Value>

The thin-wall molded article formed of the alicyclic polyimide resin composition was measured for a total light transmittance and a haze value as indices of colorlessness and transparency, respectively, according to "JIS K7105: Transparency Testing Method" using a color difference turbidity meter ("Model No. COH-400") available from Nippon Denshoku Kogyo Co., Ltd.

<Surface Resistivity>

The insulating property of the thin-wall molded article formed of the alicyclic polyimide resin composition was evaluated by measuring a surface resistivity thereof under the environmental conditions of 23°C and 50% RH using a microammeter ("Model No. R-8340") available from Advantest Corp.

<Evaluation of Flame Retardancy>

The thin-wall molded article having a thickness of about 0.1 mm which was formed of the alicyclic polyimide resin composition was cut into a size of 50 mm x 200 mm and rounded into a tube shape having a diameter of 12.7 mm and a length of 200 mm to prepare a test specimen according to UL94 VTM Standard and subject the test specimen to a vertical flame test.

(Reference Example)

<Synthesis of 1,2,4,5-Cyclohexane Tetracarboxylic Acid Dianhydride>

A 5 L-capacity Hastelloy (HC22) autoclave was charged with 552 g of pyromellitic acid, 200 g of a catalyst prepared by supporting rhodium (Rh) on activated carbon (available from N.E. Chemcat Corp.) and 1656 g of water, and while stirring the contents of the autoclave, an inside atmosphere of the reaction vessel was replaced with hydrogen until a hydrogen pressure in the reaction vessel reached 5.0 MPa and an inside temperature of the reaction vessel was raised up to 60°C. The contents of the autoclave were reacted for 2 h while maintaining a hydrogen pressure in the autoclave at 5.0 MPa. The hydrogen gas in the reaction vessel was replaced with a nitrogen gas, and the obtained reaction solution was withdrawn from the autoclave. The thus obtained reaction solution was subjected to filtration to

separate the catalyst therefrom. The resulting filtrate was concentrated by vaporizing water under reduced pressure using a rotary evaporator to precipitate crystals, and the resulting slurry was subjected to solid-liquid separation at room temperature to separate the precipitated crystals therefrom. The thus obtained crystals were dried to obtain 481 g of 1,2,4,5-cyclohexane tetracarboxylic acid (yield: 85.0%). Successively, 481 g of 1,2,4,5-cyclohexane tetracarboxylic acid thus obtained and 4000 g of acetic anhydride were charged into a 5 L glass separable flask, and while stirring the contents of the flask, an inside atmosphere of the reaction vessel was replaced with a nitrogen gas. The contents of the flask were heated to a refluxing temperature of the solvent in a nitrogen gas atmosphere, and the solvent was refluxed for 10 min. Then, the contents of the flask were cooled to room temperature while stirring to precipitate crystals. The resulting reaction slurry was subjected to solid-liquid separation to separate the precipitated crystals therefrom, and the crystals thus separated were dried to obtain primary crystals. Further, the mother liquor separated from the crystals was concentrated under reduced pressure using a rotary evaporator to precipitate crystals. The resulting reaction slurry was subjected to solid-liquid separation to separate the precipitated crystals therefrom, and the crystals thus separated were dried to obtain secondary crystals. As a sum of the primary and secondary crystals, 1,2,4,5-cyclohexane tetracarboxylic acid dianhydride was obtained in an amount of 375 g in total (yield of the anhydride: 96.6%).

The tetracarboxylic acid dianhydride and the diamine used in the respective Production Examples and the flame retardants used in the respective Examples and Comparative Examples are as follows.

<Tetracarboxylic Acid Dianhydride>

H-PMDA: 1,2,4,5-Cyclohexane tetracarboxylic acid dianhydride

<Diamine>

BisAP: 1,4-Bis(4-amino-$\alpha$,$\alpha$-dimethylbenzyl)benzene
BAPB: 4,4'-Bis(4-aminophenoxy)biphenyl
BAFL: 9,9-Bis(4-aminophenyl)fluorene
DCHM: 4,4-Diaminodicyclohexyl methane

<Flame Retardant>

B1: Cyano-modified cyclic phenoxy phosphazene compound [tradename: "RABITLE FP-300" available from Fushimi Pharmaceutical Co., Ltd.; a mixture of compounds of the above general formula (2) in which n is 3 and 4, respectively, and the ratio of a 4-cyanophenoxy group as X to all of X groups is 50%]
B2: Triphenyl phosphate (tradename: "TPP" available from Daihachi Chemical Industry Co., Ltd.)
B3: Resorcinol bis(phenyl) phosphate (tradename: "CR-733S" available from Daihachi Chemical Industry Co., Ltd.)
B4: Phenoxy phosphazene compound (tradename: "SPS-100" available from Otsuka Chemical Co., Ltd.)

(Production Example 1)

<Synthesis of Alicyclic Polyimide Resin (A1)>

A 500 mL five-necked flask equipped with a thermometer, a stirrer, a nitrogen inlet tube and a cooling tube with a fractionating column was charged with 24.18 g (0.07 mol) of 1,4-bis(4-amino-$\alpha$,$\alpha$-dimethylbenzyl)benzene and 11.07 g (0.03 mol) of 4,4'-bis(4-aminophenoxy)biphenyl as well as 68.19 g of $\gamma$-butyrolactone having an SP value of 12.6 and 17.25 g of N,N-dimethyl acetamide having an SP value of 10.8 as solvents, and the contents of the flask were dissolved and then cooled to 5°C in an ice water bath. While maintaining the resulting solution at 5°C, 22.45 g (0.1 mol) of 1,2,4,5-cyclohexane tetracarboxylic acid dianhydride and 0.51 g (0.005 mol) of triethylamine as an imidation catalyst were added to the solution at one time. After completion of the dropwise addition, the contents of the flask were heated to 180°C and refluxed for 5 h while occasionally distilling off a distillate produced, and then the reaction was terminated. The resulting reaction solution was air-cooled until an inside temperature of the flask was dropped to 120°C, and then 143.7 g of N,N-dimethyl acetamide as a diluent were added thereto. The thus diluted reaction solution was cooled while stirring, thereby obtaining an alicyclic polyimide resin solution (A1') having a solid content of 20% by mass. Apart of the resulting solution was poured into 1 L of methanol to precipitate a polymer, and the thus precipitated polymer was separated by filtration and washed with methanol, and then dried in a vacuum dryer at 100°C for 24 h, thereby obtaining a white powder (alicyclic polyimide resin A1). As a result of subjecting the thus obtained powder to measurement of IR spectrum, IR absorption was observed at 1704 $cm^{-1}$ and 1770 $cm^{-1}$ peculiar to an imide group. Also, it was confirmed that the logarithmic viscosity of the alicyclic polyimide resin (A1) as measured was 1.05.

(Production Example 2)

<Synthesis of Alicyclic Polyimide Resin (A2)>

A 500 mL five-necked flask equipped with a thermometer, a stirrer, a nitrogen inlet tube and a cooling tube with a fractionating column was charged with 36.89 g (0.1 mol) of 4,4'-bis(4-aminophenoxy)biphenyl as well as 71.18 g of γ-butyrolactone having an SP value of 12.6 and 17.79 g of N,N-dimethyl acetamide having an SP value of 10.8 as solvents, and the contents of the flask were dissolved and then cooled to 5°C in an ice water bath. While maintaining the resulting solution at 5°C, 22.45 g (0.1 mol) of 1,2,4,5-cyclohexane tetracarboxylic acid dianhydride and 0.51 g (0.005 mol) of triethylamine as an imidation catalyst were added to the solution at one time. After completion of the dropwise addition, the contents of the flask were heated to 180°C and refluxed for 5 h while occasionally distilling off a distillate produced, and then the reaction was terminated. The resulting reaction solution was air-cooled until an inside temperature of the flask was dropped to 120°C, and then 134.7 g of N,N-dimethyl acetamide as a diluent were added thereto. The thus diluted reaction solution was cooled while stirring, thereby obtaining an alicyclic polyimide resin solution (A2') having a solid content of 20% by mass. The mass of the thus obtained solution was 278.26 g, and the total mass of the distillate was 3.66 g. A part of the resulting solution was poured into 1 L of methanol to precipitate a polymer, and the thus precipitated polymer was separated by filtration and washed with methanol, and then dried in a vacuum dryer at 100°C for 24 h, thereby obtaining a white powder (alicyclic polyimide resin A2). As a result of subjecting the thus obtained powder to measurement of IR spectrum, IR absorption was observed at 1705 $cm^{-1}$ and 1768 $cm^{-1}$ peculiar to an imide group. Also, it was confirmed that the logarithmic viscosity of the alicyclic polyimide resin (A2) as measured was 1.24.

(Production Example 3)

<Synthesis of Alicyclic Polyimide Resin (A3)>

A 500 mL five-necked flask equipped with a thermometer, a stirrer, a nitrogen inlet tube and a cooling tube with a fractionating column was charged with 27.95 g (0.08 mol) of 9,9-bis(4-aminophenyl)fluorene and 7.38 g (0.02 mol) of 4,4'-bis(4-aminophenoxy)biphenyl as well as 69.31 g of γ-butyrolactone having an SP value of 12.6 and 17.33 g of N,N-dimethyl acetamide having an SP value of 10.8 as solvents, and the contents of the flask were dissolved and then cooled to 5°C in an ice water bath. While maintaining the resulting solution at 5°C, 22.45 g (0.1 mol) of 1,2,4,5-cyclohexane tetracarboxylic acid dianhydride and 0.51 g (0.005 mol) of triethylamine as an imidation catalyst were added to the solution at one time. After completion of the dropwise addition, the contents of the flask were heated to 180°C and refluxed for 5 h while occasionally distilling off a distillate produced, and then the reaction was terminated. The resulting reaction solution was air-cooled until an inside temperature of the flask was dropped to 120°C, and then 130.7 g of N,N-dimethyl acetamide as a diluent were added thereto. The thus diluted reaction solution was cooled while stirring, thereby obtaining an alicyclic polyimide resin solution (A3') having a solid content of 20% by mass. The mass of the thus obtained solution was 270.26 g, and the total mass of the distillate was 4.35 g. A part of the resulting solution was poured into 1 L of methanol to precipitate a polymer, and the thus precipitated polymer was separated by filtration and washed with methanol, and then dried in a vacuum dryer at 100°C for 24 h, thereby obtaining a white powder (alicyclic polyimide resin A3). As a result of subjecting the thus obtained powder to measurement of IR spectrum, IR absorption was observed at 1704 $cm^{-1}$ and 1771 $cm^{-1}$ peculiar to an imide group. Also, it was confirmed that the logarithmic viscosity of the alicyclic polyimide resin (A3) as measured was 1.16.

(Production Example 4)

<Synthesis of Alicyclic Polyimide Resin (A4)>

A 500 mL five-necked flask equipped with a thermometer, a stirrer, a nitrogen inlet tube and a cooling tube with a fractionating column was charged with 21.14 g (0.1 mol) of 4,4-diaminodicyclohexyl methane as well as 54.54 g of N-methyl-2-pyrrolidone having an SP value of 11.3 and 13.60 g of N,N-dimethyl acetamide having an SP value of 10.8 as solvents, and the contents of the flask were dissolved and then cooled to 5°C in an ice water bath. While maintaining the resulting solution at 5°C, 22.62 g (0.1 mol) of 1,2,4,5-cyclohexane tetracarboxylic acid dianhydride and 0.50 g (0.005 mol) of triethylamine as an imidation catalyst were added to the solution at one time. The contents of the flask were heated to 130°C and stirred for about 30 min to uniformly dissolve massive salts produced. Thereafter, the contents of the flask were heated to 180°C and refluxed for 6 h while occasionally distilling off a distillate produced, and then the reaction was terminated. The resulting reaction solution was air-cooled until an inside temperature of the flask was dropped to 120°C, and then 113.4 g of N,N-dimethyl acetamide as a diluent were added thereto. The thus diluted reaction solution was cooled while stirring, thereby obtaining an alicyclic polyimide resin solution (A4') having a concentration of

20% by mass. The mass of the thus obtained solution was 223.82 g, and the total mass of the distillate was 3.54 g. A part of the resulting solution was poured into 1 L of methanol to precipitate a polymer, and the thus precipitated polymer was separated by filtration and washed with methanol, and then dried in a vacuum dryer at 100°C for 24 h, thereby obtaining a white powder (alicyclic polyimide resin (A4)). As a result of subjecting the thus obtained powder to measurement of IR spectrum, IR absorption was observed at 1691 $cm^{-1}$ and 1764 $cm^{-1}$ peculiar to an imide group. Also, it was confirmed that the logarithmic viscosity of the alicyclic polyimide resin (A4) as measured was 0.86.

(Example 1)

A cyano-modified cyclic phenoxy phosphazene compound (B1) as a flame retardant was added to the alicyclic polyimide resin solution (A1') obtained in Production Example 1 at room temperature in such an amount that the content of the compound (B1) in the resulting composition was 3 parts by mass on the basis of 100 parts by mass of solid components of the polyimide resin. The thus obtained composition was mixed at 70°C for 2 h while stirring, thereby obtaining an alicyclic polyimide resin composition solution. The resulting alicyclic polyimide resin composition solution had a concentration of 20.48% by mass. The thus obtained alicyclic polyimide resin composition solution was cast over a glass substrate uniformly coated with a plastic release agent (Pelicoat) using a 1000 μm doctor blade. The alicyclic polyimide resin composition solution thus applied was placed on a hot plate at 100°C for 60 min to volatilize the solvent therefrom, thereby obtaining a colorless transparent primary dried film having a self-supporting property. The thus obtained film was fixed to a stainless steel frame and vacuum-dried at 200°C for 3 h to remove the residual solvent therefrom, thereby obtaining a 97 μm-thick transparent thin-wall molded article formed of the alicyclic polyimide resin composition. The resulting thin-wall molded article was measured for a total light transmittance, a haze value, a glass transition temperature and a surface resistivity thereof. Further, as a result of subjecting the thin-wall molded article to a flame test, it was confirmed that the thin-wall molded article had a flame retardancy corresponding to UL Standard VTM-0. The results are shown in Table 1.

(Example 2)

A cyano-modified cyclic phenoxy phosphazene compound (B1) as a flame retardant was added to the alicyclic polyimide resin solution (A2') obtained in Production Example 2 at room temperature in such an amount that the content of the compound (B1) in the resulting composition was 5 parts by mass on the basis of 100 parts by mass of solid components of the polyimide resin. The thus obtained composition was mixed at 70°C for 2 h while stirring, thereby obtaining an alicyclic polyimide resin composition solution. The resulting alicyclic polyimide resin composition solution had a concentration of 20.79% by mass.

Next, a 101 μm-thick transparent thin-wall molded article formed of an alicyclic polyimide resin composition was produced by the same method as in Example 1 except for using the alicyclic polyimide resin composition solution produced above. The resulting thin-wall molded article was measured for a total light transmittance, a haze value, a glass transition temperature and a surface resistivity thereof. Further, as a result of subjecting the thin-wall molded article to a flame test, it was confirmed that the thin-wall molded article had a flame retardancy corresponding to UL Standard VTM-0. The results are shown in Table 1.

(Example 3)

A cyano-modified cyclic phenoxy phosphazene compound (B1) as a flame retardant was added to the alicyclic polyimide resin solution (A3') obtained in Production Example 3 at room temperature in such an amount that the content of the compound (B1) in the resulting composition was 3 parts by mass on the basis of 100 parts by mass of solid components of the polyimide resin. The thus obtained composition was mixed at 70°C for 2 h while stirring, thereby obtaining an alicyclic polyimide resin composition solution. The resulting alicyclic polyimide resin composition solution had a concentration of 20.48% by mass.

Next, a 100 μm-thick transparent thin-wall molded article formed of an alicyclic polyimide resin composition was produced by the same method as in Example 1 except for using the alicyclic polyimide resin composition solution produced above. The resulting thin-wall molded article was measured for a total light transmittance, a haze value, a glass transition temperature and a surface resistivity thereof. Further, as a result of subjecting the thin-wall molded article to a flame test, it was confirmed that the thin-wall molded article had a flame retardancy corresponding to UL Standard VTM-0. The results are shown in Table 1.

(Example 4)

A cyano-modified cyclic phenoxy phosphazene compound (B1) as a flame retardant was added to the alicyclic

polyimide resin solution (A4') obtained in Production Example 4 at room temperature in such an amount that the content of the compound (B1) in the resulting composition was 10 parts by mass on the basis of 100 parts by mass of solid components of the polyimide resin. The thus obtained composition was mixed at 70°C for 2 h while stirring, thereby obtaining an alicyclic polyimide resin composition solution. The resulting alicyclic polyimide resin composition solution had a concentration of 21.57% by mass.

Next, a 102 μm-thick transparent thin-wall molded article formed of an alicyclic polyimide resin composition was produced by the same method as in Example 1 except for using the alicyclic polyimide resin composition solution produced above. The resulting thin-wall molded article was measured for a total light transmittance, a haze value, a glass transition temperature and a surface resistivity thereof. Further, as a result of subjecting the thin-wall molded article to a flame test, it was confirmed that the thin-wall molded article had a flame retardancy corresponding to UL Standard VTM-0. The results are shown in Table 1.

(Example 5)

A cyano-modified cyclic phenoxy phosphazene compound (B1) as a flame retardant was added to the alicyclic polyimide resin solution (A1') obtained in Production Example 1 at room temperature in such an amount that the content of the compound (B1) in the resulting composition was 10 parts by mass on the basis of 100 parts by mass of solid components of the polyimide resin. The thus obtained composition was mixed at 70°C for 2 h while stirring, thereby obtaining an alicyclic polyimide resin composition solution. The resulting alicyclic polyimide resin composition solution had a concentration of 21.57% by mass.

Next, a 105 μm-thick colorless transparent thin-wall molded article formed of an alicyclic polyimide resin composition was produced by the same method as in Example 1 except for using the alicyclic polyimide resin composition solution produced above. The resulting thin-wall molded article was measured for a total light transmittance, a haze value, a glass transition temperature and a surface resistivity thereof. Further, as a result of subjecting the thin-wall molded article to a flame test, it was confirmed that the thin-wall molded article had a flame retardancy corresponding to UL Standard VTM-0. The results are shown in Table 1.

(Example 6)

A cyano-modified cyclic phenoxy phosphazene compound (B1) as a flame retardant was added to the alicyclic polyimide resin solution (A4') obtained in Production Example 4 at room temperature in such an amount that the content of the compound (B1) in the resulting composition was 5 parts by mass on the basis of 100 parts by mass of solid components of the polyimide resin. The thus obtained composition was mixed at 70°C for 2 h while stirring, thereby obtaining an alicyclic polyimide resin composition solution. The resulting alicyclic polyimide resin composition solution had a concentration of 20.79% by mass.

Next, a 104 μm-thick transparent thin-wall molded article formed of an alicyclic polyimide resin composition was produced by the same method as in Example 1 except for using the alicyclic polyimide resin composition solution produced above. The resulting thin-wall molded article was measured for a total light transmittance, a haze value, a glass transition temperature and a surface resistivity thereof. Further, as a result of subjecting the thin-wall molded article to a flame test, it was confirmed that the thin-wall molded article had a flame retardancy corresponding to UL Standard VTM-0. The results are shown in Table 1.

(Comparative Example 1)

A 118 μm-thick transparent thin-wall molded article formed of an alicyclic polyimide resin composition was produced by the same method as in Example 1 except that triphenyl phosphate (B2) as a flame retardant was added to the alicyclic polyimide resin solution (A1') obtained in Production Example 1 in such an amount that the content of the compound (B2) in the resulting composition was 3 parts by mass on the basis of 100 parts by mass of solid components of the polyimide resin. The resulting thin-wall molded article was measured for a total light transmittance, a haze value, a glass transition temperature and a surface resistivity thereof. Further, as a result of subjecting the thin-wall molded article to a flame test, the thin-wall molded article was totally destroyed by fire, and therefore it was confirmed that the thin-wall molded article had a poor flame retardancy out of UL Standard. The results are shown in Table 2.

(Comparative Example 2)

A 103 μm-thick thin-wall molded article formed of an alicyclic polyimide resin composition was produced by the same method as in Example 1 except that triphenyl phosphate (B2) as a flame retardant was added to the alicyclic polyimide resin solution (A1') obtained in Production Example 1 in such an amount that the content of the compound

(B2) in the resulting composition was 20 parts by mass on the basis of 100 parts by mass of solid components of the polyimide resin. The resulting thin-wall molded article was measured for a total light transmittance, a haze value, a glass transition temperature and a surface resistivity thereof. As a result, it was confirmed that the total light transmittance of the thin-wall molded article was reduced and the haze value thereof was considerably increased as compared to those of the thin-wall molded article obtained in Example 1. Further, as a result of subjecting the thin-wall molded article to a flame test, it was confirmed that the thin-wall molded article had a flame retardancy corresponding to UL Standard VTM-1. The results are shown in Table 2.

(Comparative Example 3)

A 98 μm-thick thin-wall molded article formed of an alicyclic polyimide resin composition was produced by the same method as in Example 1 except that resorcinol bis(phenyl) phosphate (B3) as a flame retardant was added to the alicyclic polyimide resin solution (A1') obtained in Production Example 1 in such an amount that the content of the compound (B3) in the resulting composition was 20 parts by mass on the basis of 100 parts by mass of solid components of the polyimide resin. The resulting thin-wall molded article was measured for a total light transmittance, a haze value, a glass transition temperature and a surface resistivity thereof. As a result, it was confirmed that the total light transmittance of the thin-wall molded article was reduced and the haze value thereof was considerably increased as compared to those of the thin-wall molded article obtained in Example 1. Further, as a result of subjecting the thin-wall molded article to a flame test, it was confirmed that the thin-wall molded article had a flame retardancy corresponding to UL Standard VTM-1. The results are shown in Table 2.

(Comparative Example 4)

A 105 μm-thick transparent thin-wall molded article formed of an alicyclic polyimide resin composition was produced by the same method as in Example 1 except that phenoxy phosphazene (B4) as a flame retardant was added to the alicyclic polyimide resin solution (A1') obtained in Production Example 1 in such an amount that the content of the compound (B4) in the resulting composition was 3 parts by mass on the basis of 100 parts by mass of solid components of the polyimide resin. The resulting thin-wall molded article was measured for a total light transmittance, a haze value, a glass transition temperature and a surface resistivity thereof. As a result of subjecting the thin-wall molded article to a flame test, it was confirmed that the thin-wall molded article had a flame retardancy corresponding to UL Standard VTM-1. The results are shown in Table 2.

(Comparative Example 5)

A 109 μm-thick thin-wall molded article formed of an alicyclic polyimide resin composition was produced by the same method as in Example 1 except that a phenoxy phosphazene compound (B4) as a flame retardant was added to the alicyclic polyimide resin solution (A1') obtained in Production Example 1 in such an amount that the content of the compound (B4) in the resulting composition was 20 parts by mass on the basis of 100 parts by mass of solid components of the polyimide resin. The resulting thin-wall molded article was measured for a total light transmittance, a haze value, a glass transition temperature and a surface resistivity thereof. As a result of subjecting the thin-wall molded article to a flame test, although the thin-wall molded article had a flame retardancy corresponding to UL Standard VTM-0, the glass transition temperature of the thin-wall molded article was considerably lowered, the total light transmittance thereof was reduced, and the haze value thereof was increased as compared to those of the thin-wall molded article obtained in Example 1. The results are shown in Table 2.

(Comparative Example 6)

A 111 μm-thick transparent thin-wall molded article formed of an alicyclic polyimide resin composition was produced by the same method as in Example 1 except that a cyano-modified cyclic phenoxy phosphazene compound (B1) as a flame retardant was added to the alicyclic polyimide resin solution (A1') obtained in Production Example 1 in such an amount that the content of the compound (B1) in the resulting composition was 20 parts by mass on the basis of 100 parts by mass of solid components of the polyimide resin. The resulting thin-wall molded article was measured for a total light transmittance, a haze value, a glass transition temperature and a surface resistivity thereof. As a result of subjecting the thin-wall molded article to a flame test, although the thin-wall molded article had a flame retardancy corresponding to UL Standard VTM-0, the glass transition temperature of the thin-wall molded article was considerably lowered as compared to that of the thin-wall molded article obtained in Example 1. The results are shown in Table 2.

(Comparative Example 7) to (Comparative Example 10)

Thin-wall molded articles each formed of an alicyclic polyimide resin composition as shown in Table 3 were produced by the same method as in Example 1 except that no flame retardant was added thereto. The resulting thin-wall molded articles were respectively measured for a total light transmittance, a haze value, a glass transition temperature and a surface resistivity thereof. As a result of subjecting the thin-wall molded articles to a flame test, the thin-wall molded articles were totally destroyed by fire, and therefore it was confirmed that the thin-wall molded articles had a poor flame retardancy out of UL Standard. The results are shown in Table 3.

TABLE 1

| | Examples | | | | | |
|---|---|---|---|---|---|---|
| | 1 | 2 | 3 | 4 | 5 | 6 |
| Production Examples of alicyclic polyimide resins | Production Example 1 | Production Example 2 | Production Example 3 | Production Example 4 | Production Example 1 | Production Example 4 |
| Component A | | | | | | |
| Alicyclic polyimide resin | A1 | A2 | A3 | A4 | A1 | A4 |
| Amount compounded (part by mass) | 100 | 100 | 100 | 100 | 100 | 100 |
| Component B | | | | | | |
| Flame retardant | B1 | B1 | B1 | B1 | B1 | B1 |
| Amount compounded (part by mass) | 3 | 5 | 3 | 10 | 10 | 5 |
| Evaluation | | | | | | |
| Total light transmittance (%) | 90.1 | 89.7 | 89.4 | 90.5 | 89.7 | 90.5 |
| Haze | 0.54 | 0.58 | 0.76 | 0.73 | 0.67 | 0.67 |
| Film thickness (μm) | 97 | 101 | 100 | 102 | 105 | 104 |
| Glass transition temperature (°C) | 286 | 277 | 385 | 244 | 263 | 259 |
| Surface resistivity ($\Omega/cm^2$) | $6.7\times10^{16}$ | $1.3\times10^{16}$ | $3,1\times10^{16}$ | $2,8\times10^{16}$ | $5,3\times10^{16}$ | $4,5\times10^{16}$ |
| Flame retardancy (UL94 Standard) | VTM-0 | VTM-0 | VTM-0 | VTM-0 | VTM-0 | VTM-0 |

TABLE 2

| | Comparative Examples | | | | | |
|---|---|---|---|---|---|---|
| | 1 | 2 | 3 | 4 | 5 | 6 |
| Production Examples of alicyclic polyimide resins | Production Example 1 | Production Example 1 | Production Example 1 | Production Example 1 | Production Example 1 | Production Example 1 |

(continued)

| | Comparative Examples | | | | | |
|---|---|---|---|---|---|---|
| | 1 | 2 | 3 | 4 | 5 | 6 |
| Component A | | | | | | |
| Alicyclic polyimide resin | A1 | A1 | A1 | A1 | A1 | A1 |
| Amount compounded (part by mass) | 100 | 100 | 100 | 100 | 100 | 100 |
| Component B | | | | | | |
| Flame retardant | B2 | B2 | B3 | B4 | B4 | B1 |
| Amount compounded (part by mass) | 3 | 20 | 20 | 3 | 20 | 20 |
| Evaluation | | | | | | |
| Total light transmittance (%) | 90.2 | 86.3 | 86.7 | 90.1 | 87.9 | 88.6 |
| Haze | 0.52 | 2.28 | 2.16 | 0.56 | 1.38 | 0.98 |
| Film thickness ($\mu$m) | 118 | 103 | 98 | 105 | 109 | 111 |
| Glass transition temperature (°C) | 291 | 231 | 223 | 285 | 225 | 231 |
| Surface resistivity ($\Omega/cm^2$) | - | $9.6\times10^{15}$ | $3,5\times10^{15}$ | - | - | $8.8x10^{15}$ |
| Flame retardancy (UL94 Standard) | Totally destroyed by fire | VTM-1 | VTM-1 | VTM-1 | VTM-0 | VTM-0 |

TABLE 3

| | Comparative Examples | | | |
|---|---|---|---|---|
| | 7 | 8 | 9 | 10 |
| Component A | | | | |
| Alicyclic polyimide resin | A1 | A2 | A3 | A4 |
| Production Examples | Production Example 1 | Production Example 2 | Production Example 3 | Production Example 4 |
| Tetracarboxylic acid dianhydride | H-PMDA | H-PMDA | H-PMDA | H-PMDA |
| Diamine | BisAP BAPB | BAPB | BAFL BAPB | DCHM |
| Component B | | | | |

(continued)

| | Comparative Examples | | | |
|---|---|---|---|---|
| | 7 | 8 | 9 | 10 |
| Flame retardant | - | - | - | - |
| Evaluation | | | | |
| Total light transmittance (%) | 90.5 | 89.8 | 89.6 | 90.9 |
| Haze | 0.36 | 0.32 | 0.38 | 0.45 |
| Film thickness (μm) | 110 | 109 | 115 | 110 |
| Glass transition temperature (°C) | 303 | 298 | 411 | 280 |
| Surface resistivity (Ω/cm2) | $1.4\times10^{16}$ | $2,8\times10^{16}$ | $5.2\times10^{16}$ | $1.7\times10^{16}$ |
| Flame retardancy (UL94 Standard) | Totally destroyed by fire | Totally destroyed by fire | Totally destroyed by fire | Totally destroyed by fire |

INDUSTRIAL APPLICABILITY

In accordance with the present invention, there are provided an alicyclic polyimide resin composition that is excellent in flame retardancy, transparency, heat resistance and insulating property without using any flame retardant having a fear of giving an adverse influence on human bodies and environmental conditions such as a halogen compound and an antimony oxide compound, and a thin-wall molded article obtained from the alicyclic polyimide resin composition. The alicyclic polyimide resin composition and the thin-wall molded article can be used as various materials requiring a transparency and a flame retardancy such as a sealing material for electric and electronic parts, a protective film material and an insulating material, more specifically, can be suitably used in applications such as a substrate for displays of computers, mobile phones, etc., an insulating substrate for solar batteries and a sealing material for light-emitting diodes.

## Claims

1. An alicyclic polyimide resin composition comprising 100 parts by mass of an alicyclic polyimide resin (A) having a structural unit represented by the following general formula (1) and from 1 to 13 parts by mass of a cyano-modified cyclic phenoxy phosphazene compound (B) represented by the following general formula (2):

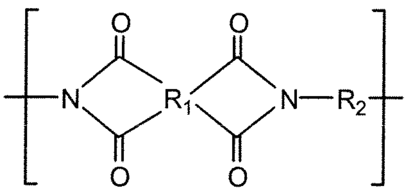

(1)

wherein $R_1$ is a tetravalent alicyclic hydrocarbon group having 4 to 16 carbon atoms; and $R_2$ is at least one group selected from the group consisting of a divalent aliphatic hydrocarbon group having 2 to 28 carbon atoms and a divalent aromatic hydrocarbon group having 6 to 27 carbon atoms, and

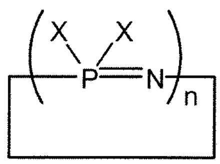

(2)

wherein n is an integer of 3 or 4; and a plurality of X groups are each independently a phenoxy group or a 4-cyanophenoxy group with the proviso that 25% or more of the plurality of X groups are a 4-cyanophenoxy group and all of the plurality of X groups may be a 4-cyanophenoxy group.

**2.** The alicyclic polyimide resin composition according to claim 1, wherein the alicyclic polyimide resin (A) is a polyimide resin having a structural unit represented by the following general formula (3):

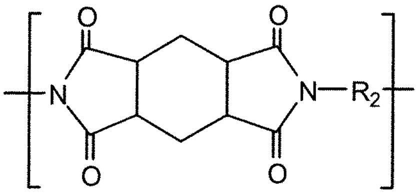
(3)

wherein $R_2$ is the same as defined above.

**3.** The alicyclic polyimide resin composition according to claim 1 or 2, wherein in the general formulae (1) and (3), $R_2$ is a divalent aromatic hydrocarbon group having 6 to 27 carbon atoms, and a nitrogen atom bonded to $R_2$ is directly bonded to an aromatic ring of $R_2$.

**4.** A thin-wall molded article comprising the alicyclic polyimide resin composition as defined in any one of claims 1 to 3, which is produced by casting a solution of the alicyclic polyimide resin composition prepared by dissolving the alicyclic polyimide resin composition in an organic solvent and then heating the cast solution.

**Patentansprüche**

**1.** Alicyclische Polyimidharz-Zusammensetzung, umfassend 100 Masse-% eines alicyclischen Polyimidharzes (A) mit einer Struktureinheit der nachstehenden allgemeinen Formel (1) und 1 bis 13 Masse-% einer Cyano-modifizierten cyclischen Phenoxyphosphazenverbindung (B) der nachstehenden allgemeinen Formel (2):

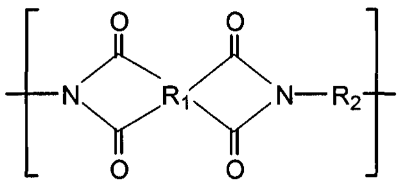
(1)

worin $R_1$ eine tetravalente alicyclische Kohlenwasserstoffgruppe mit 4 bis 16 Kohlenstoffatomen ist und $R_2$ zumindest eine Gruppe, ausgewählt aus der Gruppe bestehend aus einer divalenten aliphatischen Kohlenwasserstoffgruppe mit 2 bis 28 Kohlenstoffatomen und einer divalenten aromatischen Kohlenwasserstoffgruppe mit 6 bis 27 Kohlenstoffatomen, ist, und

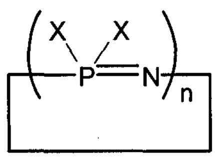
(2)

worin n eine ganze Zahl von 3 oder 4 ist und mehrere X-Gruppen jeweils unabhängig eine Phenoxygruppe oder eine 4-Cyanophenoxygruppe sind, mit der Massgabe, dass 25 % oder mehr der mehreren X-Gruppen eine 4-Cyanophenoxygruppe sind und alle der mehreren X-Gruppen eine 4-Cyanophenoxygruppe sein können.

**2.** Alicyclische Polyimidharz-Zusammensetzung gemäss Anspruch 1, wobei das alicyclische Polyimidharz (A) ein Polyimidharz mit einer Struktureinheit der nachstehenden allgemeinen Formel (3) ist:

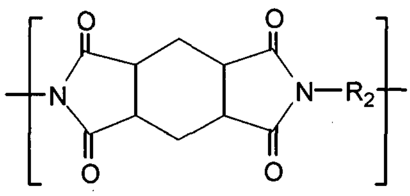

(3)

worin $R_2$ wie oben definiert ist.

**3.** Alicyclische Polyimidharz-Zusammensetzung gemäss Anspruch 1 oder 2, wobei in den allgemeinen Formeln (1) und (3) $R_2$ eine divalente aromatische Kohlenwasserstoffgruppe mit 6 bis 27 Kohlenstoffatomen ist und ein an $R_2$ gebundenes Stickstoffatom direkt an den aromatischen Ring von $R_2$ gebunden ist.

**4.** Dünnwandiger Formartikel, umfassend die alicyclische Polyimidharz-Zusammensetzung, wie in irgendeinem der Ansprüche 1 bis 3 definiert, der durch Giessen einer Lösung der alicyclischen Polyimidharz-Zusammensetzung, hergestellt durch Auflösen der alicyclischen Polyimidharz-Zusammensetzung in einem organischen Lösungsmittel und dann Erwärmen der Gusslösung, hergestellt wird.

**Revendications**

**1.** Composition de résine de polyimide alicyclique comprenant 100 parties en masse d'une résine de polyimide alicyclique (A) contenant un motif structurel représenté par la formule générale (1) suivante et 1 à 13 parties en poids d'un composé de phénoxy phosphazène cyclique à modification cyano (B) représenté par la formule générale (2) suivante :

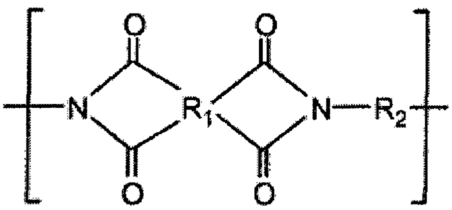

(1)

dans laquelle $R_1$ est un groupement hydrocarboné alicyclique tétravalent ayant 4 à 16 atomes de carbone ; et $R_2$ est au moins un groupement choisi dans le groupe constitué par un groupement hydrocarboné aliphatique divalent ayant 2 à 28 atomes de carbone et un groupement hydrocarboné aromatique divalent ayant 6 à 27 atomes de carbone, et

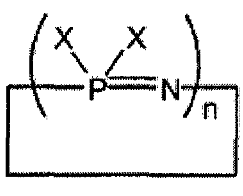

(2)

dans laquelle n est un nombre entier égal à 3 ou 4 ; et une pluralité de groupements X sont chacun indépendamment un groupement phénoxy ou un groupement 4-cyanophénoxy à condition que 25 % ou plus de la pluralité de groupements X soient un groupement 4-cyanophénoxy et que la totalité de la pluralité de groupements X puissent être un groupement 4-cyanophénoxy.

**2.** Composition de résine de polyimide alicyclique selon la revendication 1, dans laquelle la résine de polyimide alicyclique (A) est une résine de polyimide ayant un motif structurel représenté par la formule générale (3) suivante:

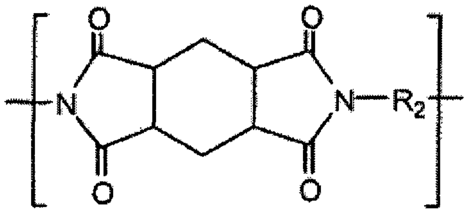

(3)

dans laquelle $R_2$ est tel que défini ci-dessus.

3. Composition de résine de polyimide alicyclique selon la revendication 1 ou 2, dans laquelle, dans les formules générales (1) et (3), $R_2$ est un groupement hydrocarboné aromatique divalent ayant 6 à 27 atomes de carbone et un atome d'azote lié à $R_2$ est directement lié à un cycle aromatique de $R_2$.

4. Article moulé à paroi mince, comprenant la composition de résine de polyimide alicyclique telle que définie dans l'une quelconque des revendications 1 à 3, qui est produit par coulée d'une solution de la composition de résine de polyimide alicyclique préparée par dissolution de la composition de résine de polyimide alicyclique dans un solvant organique, puis chauffage de la solution coulée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8143666 A
- JP 8225645 A
- JP 2003168800 A
- JP 2002235001 A